# EUROPEAN PATENT APPLICATION

(11) **EP 3 205 205 A1**
(43) Date of publication of application: **16.08.2017**
(21) Application number: 17155043.7
(22) Date of filing: 07.02.2017
(51) Int. Cl.: A01K 1/00, A01K 1/01, A01K 1/015

(54) **CATTLE STABLE**

(30) Priority: 09.02.2016 BE 201605102
(71) Applicant: VDV R&D BVBA, 2310 Rijkevorsel (BE)
(72) Inventor: VAN DER VELDEN, Gert, 2321 Meer (Hoogstraten) (BE)
(74) Representative: Van hunsel, Lieven M.S.

(57) **Abstract**

Cowshed (1) with a shed floor (3) under which a manure pit (2) is provided, which consists of a pit (5) in which manure pit compartments (10) are formed parallel to one another, wherein each basement compartment (10) extends in its longitudinal direction (VV') and is laterally delimited by parallel, lateral retaining walls (11), wherein one or several tubular ducts (20) are integrated in the shed floor (3) extending in a direction (UU') which is not parallel to the longitudinal direction (VV') of the manure pit compartments (10) and wherein openings (21) are provided via which gases which are present in the manure pit compartments (10) can flow into the tubular ducts (20) so as to be discharged.

## Description

The present invention concerns a cowshed.

More specifically, the present invention concerns a cowshed for stalling dairy cattle which is arranged such that there is a zone for feeding the animals on the one hand, and a zone where the animals can move about freely which consists of platforms and a resting zone, more specifically the cubicles.

It is customary that there is a manure pit under the shed as a whole, for storing manure.

Below are successively discussed the usual construction of a manure pit and the mentioned zones with their corresponding specific floor structure so as to frame the challenges to which the present invention offers a solution.

A conventional manure pit consists of a rectangular pit with two opposite lateral basement walls in the longitudinal direction and two opposite end basement walls in the widthwise direction.

In this tub are usually provided parallel walls running in the longitudinal direction of the tub.

Thus, parallel compartments are provided for, defined by walls which also form the support for the actual floor boards, which is why they will be called retaining walls as of now.

As regards the zones in the shed, we will further discuss the feeding zone, the walking zone and the lying zone.

Every zone is characterised by a specific floor structure.

The feeding zone is provided with a closed floor. The feeding zone usually consists of feed compartments which are often provided at the sides or in the middle of the shed.

The platforms usually have openings or passages to the underlying manure pit.

To this end, a platform generally consists of concrete grids with slot-shaped openings, whereby the manure and urine can fall through these openings in the underlying manure pit.

Alternatively, the platform is built of closed floor elements and they may possibly be arranged such that an opening is either or not maintained between these floor elements.

A manure scraper or manure robot provides for some additional discharge of manure to the underlying manure pit.

The lying zone is usually made up of rows of cubicles with closed and slightly elevated floors, so that the cubicles remain dry and clean.

Indeed, the cubicles are usually placed side by side to thus form rows which are often provided in pairs and in the longitudinal direction of the shed.

These rows are usually provided at a distance from the sides, and in the case of double rows they are arranged such that the cows are lying with their heads facing each other.

In such a cubicle, a cow can go and lie down to rest and ruminate.

A cubicle for a cow is usually 1.10 meters wide and 2.40 meters long, and it is provided with a division on both sides, for example made of tubes.

The bottom of the cubicles, usually made of prefabricated floor elements which are called bed floors or cubicle sheets in jargon, is usually provided somewhat higher than the rest of the shed, as already mentioned, so that the cubicles remain dry and clean.

A problem arising with these cowsheds is the high emission of harmful gases such as ammonia gas, among others.

Indeed, the usual modern cowsheds have open sides so as to provide for adequate air circulation and ventilation for the welfare of the cattle.

The harmful gases are thereby extracted from the manure pit and discharged into the atmosphere.

This phenomenon is all the more frequent as the platform has an open structure.

One aims to prevent one and other by extracting the air from a shed and by washing it.

For this application, the shed structure should be maximally closed and one should provide a so-called air scrubber or air cleaning system. This goes against the general trend of open sheds.

It is clear that high costs are incurred.

The present invention aims to remedy one or several of the preceding and/or other problems.

More specifically, it is an object of the invention to provide an economical solution to the problematic emission of harmful gases originating from manure.

To this end, the present invention concerns a cowshed with a shed floor for stalling cattle, wherein the shed floor comprises cubicles and a platform, formed of bed floors and floor elements respectively, and wherein a manure pit is provided under the shed floor, wherein the manure pit consists of a pit wherein pit compartments are formed parallel to one another, wherein each manure pit compartment extends in a longitudinal direction and is laterally delimited by parallel, lateral retaining walls extending in the same longitudinal direction, characterised in that one or several tubular ducts are integrated in the shed floor extending mainly in a direction which is not parallel to the longitudinal direction of the manure pit compartments and wherein one or several openings are provided through which gases present in the manure pit compartments can flow into at least one of the tubular ducts so as to be discharged.

When speaking in general terms in the present text about the non-parallel direction of the longitudinal direction of the manure pit compartments on the one hand and of a duct on the other hand, the direction of a duct should be interpreted as the direction of the general flow in the majority of the extraction zones.

Moreover, the tubular ducts are preferably made essentially straight or linear.

As the duct extends in a direction which is not parallel to the longitudinal direction of the manure pit compartments it may successively pass through many different manure pit compartments, if not all manure pit compartments, making it possible to extract harmful gases from several or all manure pit compartments.

Furthermore, since the tubular ducts are integrated in the shed floor and their volume is restricted, there is no loss of useful space within the cowshed.

Since the harmful gases can be extracted efficiently and directly, i.e. without any distance between the duct and the manure pit compartment, and therefore at the source, more specifically by directly extracting the basement air in the manure pit compartments, the volume of air to be discharged and washed is very limited.

Thus, it is possible to use an extraction system of limited size.

This will also greatly reduce the investment cost as a relatively small air scrubber will do.

According to a preferred embodiment of a cowshed according to the invention, several tubular ducts are integrated in the shed floor, wherein the influx of gases from the manure pit compartments is evenly distributed over the different tubular ducts by opening every duct, via an opening, to merely a fraction of the manure pit compartments over which it passes.

In such an embodiment of a cowshed according to the invention, an efficient extraction of the manure gases from the basement can be optimised in a very simple way and with only limited resources.

As a function of the extraction distance, and thus the associated resistance, the discharge openings can be adjusted or optimised in terms of passage percentage and number.

According to yet another preferred characteristic of a cowshed according to the invention, the cowshed comprises rows of cubicles arranged next to one another, wherein the rows of cubicles extend in a direction at right angles to the longitudinal direction of the basement compartments and which is further parallel to the direction in which the tubular ducts extend.

Such an embodiment of a cowshed according to the invention differs from the known cowsheds having a so-called "longitudinal" configuration, wherein the rows of cubicles as well as the manure pit compartments extend in the same direction.

Indeed, a first major disadvantage of such a known cowshed with a "longitudinal" configuration is that extracting the basement air in such a "longitudinal" configuration is very difficult, if not impossible.

Indeed, an excessively large suction force is required to extract basement gases from underneath the grid floor in the direction of the cubicles.

Moreover, the usual 'longitudinal' arrangement does not allow for it as the basement wall hinders the access to the basement compartment under the platform. In this case, air can only be extracted directly from underneath the cubicles, and not from underneath the platform.

Another major disadvantage of the known "longitudinal" configurations is that the mixing of the manure in order to obtain a homogenous substance takes much longer, since there is much difference between the fresh manure under the grid floors and the older manure which ends up under the cubicles, which is not so with a cowshed according to the invention in an aforementioned embodiment.

Another disadvantage of the known "longitudinal" configurations is that the lengthy mixing also produces more ammonia.

In an aforementioned embodiment of a cowshed according to the invention, it is just the other way around, i.e. the gases in the manure pit can be easily extracted via the tubular ducts passing over the manure pit compartments.

Every manure pit compartment also passes under intermediate walking compartments as well as under rows of cubicles, resulting in a much better mix of the manure, so that one will have to mix only to a limited extent and less long than in the known cowsheds.

Less prolonged mixing of the manure also means reduced ammonia emissions.

The embodiment of a cowshed according to the invention further offers the advantage that it becomes possible to expand the shed in a simple manner.

Indeed, on the one hand it is true that the most flexible manner to expand a cowshed consists in extending the rows of cubicles, i.e. expanding the shed in the longitudinal direction, and this is not hindered in the discussed embodiment as the mixing pits are provided on the long sides of the shed in this case.

Additionally, in a cowshed according to the invention, wherein the rows of cubicles extend in a direction at right angles to the direction of the manure pit compartments, an extension of the length of the rows of cubicles has no influence whatsoever on the length of the manure pit compartments, yet only rows of manure pit compartments of the same length are added.

Hence, in a cowshed according to the invention, one or several of the above-mentioned tubular ducts are preferably provided under each row of cubicles, extending at right angles to the longitudinal direction of the manure pit compartments and wherein one or several openings are provided via which gases that are present in the manure pit compartments can flow into at least one of the tubular ducts.

A major advantage of such an embodiment of a cowshed according to the invention is that it is sufficient to make the bed floors out of which the rows of cubicles are assembled such that one or several transverse tubular ducts can be easily assembled with them, for example by directly integrating a portion of such a duct or ducts in a bed floor concerned or by making the shape of a bed floor concerned such that it can be easily combined with other elements into one or several tubular ducts.

In a cowshed according to the invention, preferably one or several of the tubular ducts are connected to an extraction system discharging harmful gases from the manure pit compartments through the respective tubular ducts into an air scrubber.

The advantage of such a cowshed according to the invention is obvious in that harmful gases can be extracted from the manure pit in a very efficient way.

According to another preferred embodiment of a cowshed according to the invention, floor elements are used for the platform, wherein the floor elements are formed of concrete grooved sheets placed at some intermediate distance over the manure pit.

According to the invention it is not excluded, however, to use floor elements made of other materials or materials which adopt a completely different shape.

For example, the floor elements can be made rather closed, such that gases cannot easily escape from the manure pit and such that the extraction effect under the influence of a good ventilation and open structure of the superstructure of the cowshed remains limited.

As a result, the harmful gases can be extracted from the manure pit into the tubular ducts without too much suction power.

In order to better explain the characteristics of the invention, the following preferred embodiment of a cowshed according to the invention is described by way of example only without being limitative in any way, with reference to the accompanying drawings, in which:
figure 1 is a view in perspective of the manure pit of a cowshed according to the invention;
figure 2 is a plan view according to arrow F2 of the same manure pit from figure 1;
figure 3 is a view in perspective, once again of the manure pit from figure 1, wherein floor elements and a sub-structure for cubicles are provided on the manure pit so as to form a shed floor;
figure 4 is a plan view according to arrow F4 of the same partially covered manure pit from figure 3;
figures 5 to 7 show a view in more detail of the portions that are indicated by the sections V-V to VII-VII respectively;
figures 8 and 9 are views in perspective and in plan view, as in figures 3 and 4, of the same manure pit after bed floors have been provided as well to finish the shed floor; and,
figure 10 is a view in perspective of the finished cowshed after removal of the roof and with a transparent view of the front wall.

The cowshed 1 represented in the figures is a stable for stalling and breeding livestock, typically cattle.

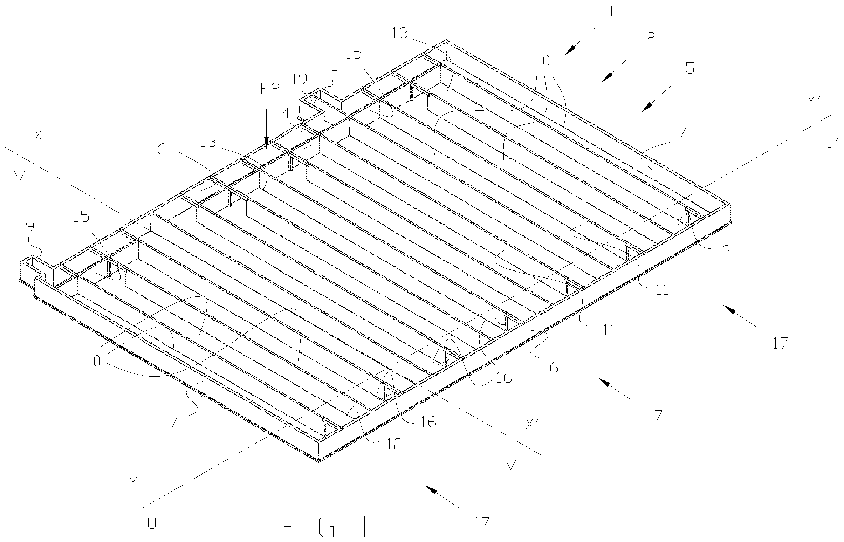

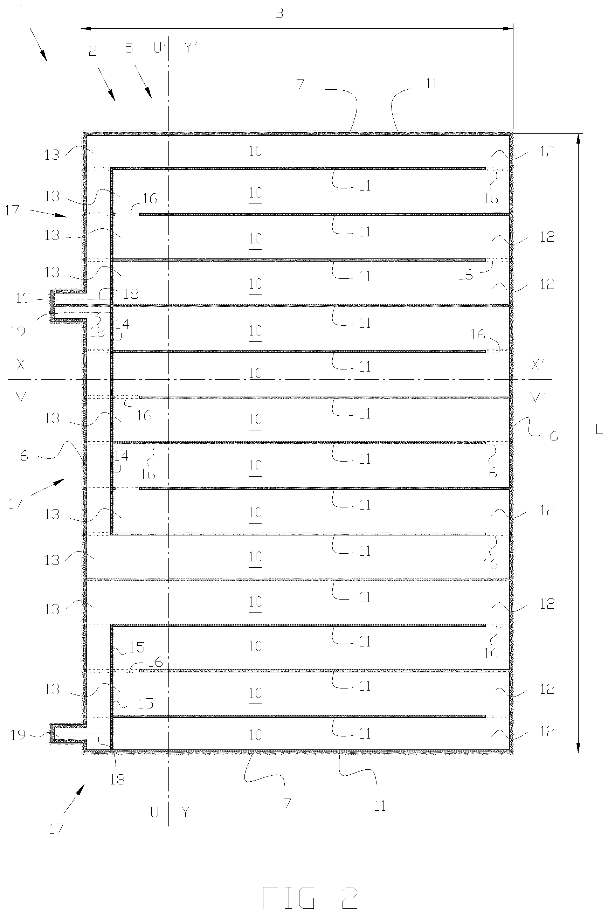

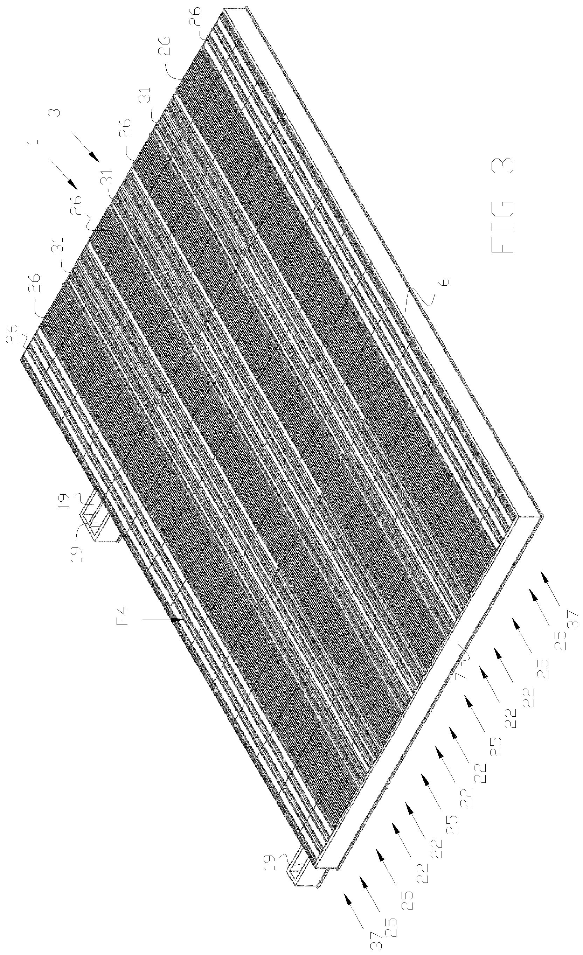

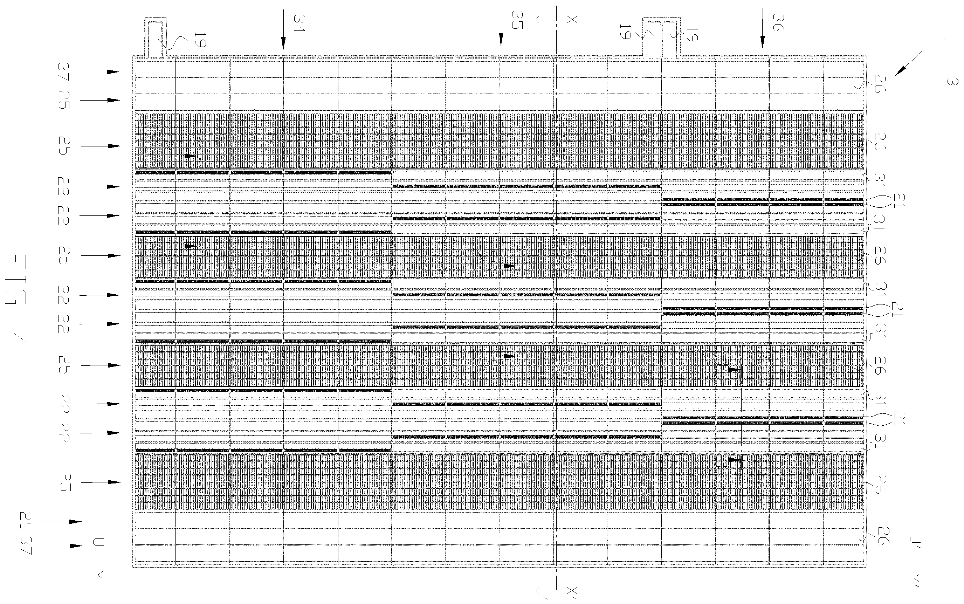

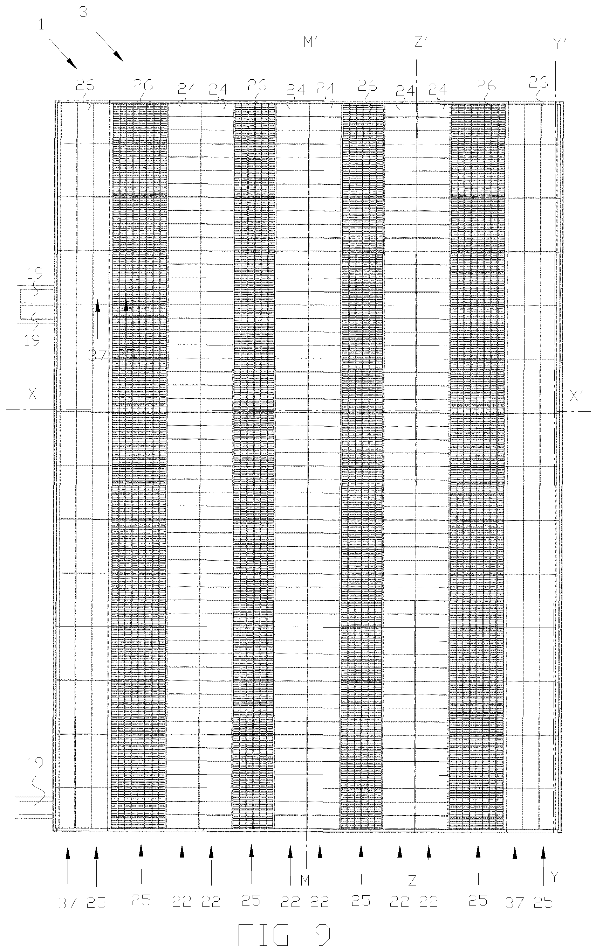

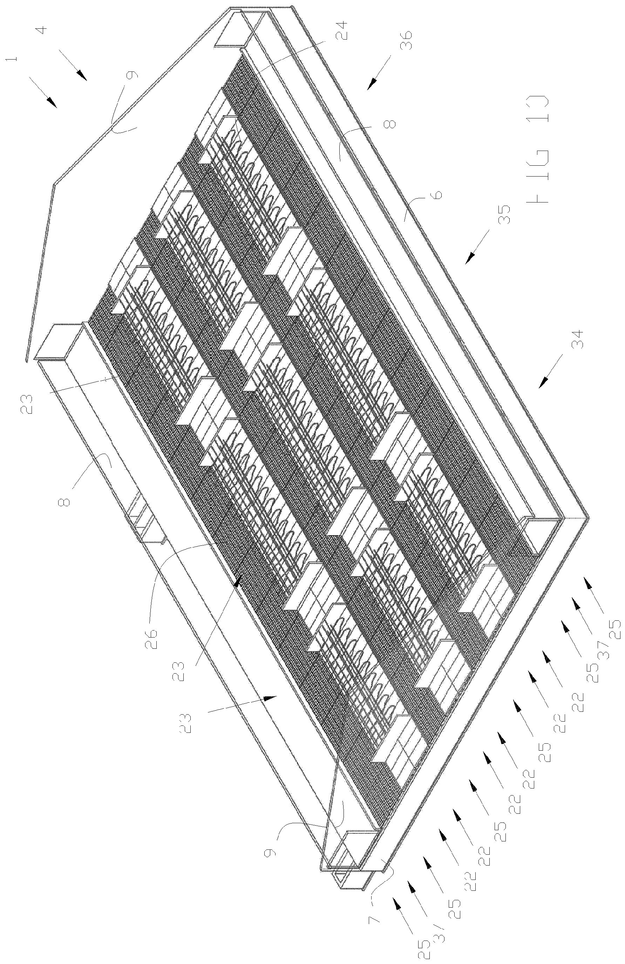

Figures 1 and 2 represent a first phase during the construction of the cowshed 1, more specifically the phase in which a manure pit 2 is obtained on which a shed floor 3 and the actual building 4 will be provided later on, as is represented in the other figures 3 to 10.

The manure pit 2 is composed of a pit 5 having a substantially rectangular shape, with two opposite lateral basement walls 6 and two opposite end basement walls 7.

In the extension of the lateral basement walls 6 and the end basement walls 7 are formed, at a later stage, the side walls 8 and the end walls 9 of the building 4, and thus the basement walls 6 and 7 can be respectively regarded as a part of the side walls 8 and end walls 9 of the building 4.

The end walls 9 or end basement walls 7 form the width B of the cowshed 1 and extend in a direction XX', whereas the side walls 8 or lateral basement walls 6 form the length L of the cowshed 1 and extend in the direction YY' perpendicular thereto.

Between the two opposite side walls 8 or lateral basement walls 6 of the cowshed 1 are formed, parallel to each other, rectangular manure pit compartments 10.

The manure pit compartments 10 extend with their length in the longitudinal direction VV' which is parallel to the direction XX' in which the end walls 9 extend.

Each manure pit compartment 10 is hereby laterally delimited by parallel, lateral retaining walls 11 extending in the direction VV' as well.

For the sake of convenience, the end basement walls 7 or end walls 9 are also considered as lateral retaining walls 1 in this context which laterally delimit said manure pit compartment 10.

On the end surfaces 12 and 13, a manure pit compartment 11 is delimited by one of the lateral basement walls 6, or by a side wall 8 - which is the same, or by a transverse wall portion 14 or 15 extending parallel to one of the side walls 8, i.e. in the direction YY'.

Further, it should be noted that a number of adjacent manure pit compartments 10 are connected to one another via an opening 16 in the retaining walls 11.

Each group of manure pit compartments 17 which are thus connected to one another forms a sort of maze or a continuous, snake-like manure pit compartment 17.

In the case of the figures, there are three such groups 17 of manure pit compartments 10 which are connected to one another.

For each said group of connected manure pit compartments 17 is hereby provided a manure mixer 18 to mix the manure which ends up in the respective group of manure pit compartments 17.

Each group of manure pit compartments 17 is further laterally expanded somewhat at the manure mixers 18, whereby the pit 5 of the manure pit 2 and the corresponding manure pit compartment 10 extends outside the walls of the cowshed 1, in this case one of the side walls 8, so as to form a mixer pit 19 from where manure can be pumped from the outside of the cowshed 1.

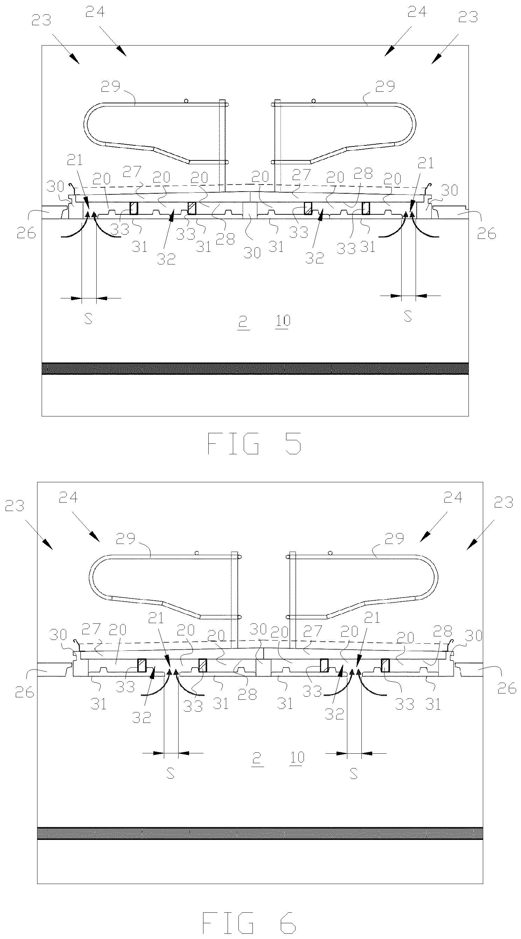

Characteristic of the invention is that the cowshed 1 is provided with a shed floor 3 in which tubular ducts 20 are integrated, represented in more detail in figures 5 to 7 and extending in a direction UU' at right angles to the longitudinal direction VV' of the manure pit compartments 10 and thus also at right angles to the lateral retaining walls 11.

In other embodiments, the tubular ducts 20 may extend in other directions UU', which are not parallel to the direction VV' in which the manure pit compartments 10 extend, but wherein the angle between the directions UU' and VV' is not exactly 90°.

In these tubular ducts 20 are provided openings 21 via which gases coming from the manure in the manure pit compartments 10 can flow into the tubular ducts 20 so as to be discharged.

In the embodiment of a cowshed 1 according to the invention as discussed here, these tubular ducts 20 are realised as follows.

The fact is that the shed floor 3 is configured or organised such that the shed floor 3 comprises rows 22 of cubicles 23 arranged side by side which are made with adjacent bed floors 24 and wherein, alternately between the rows 22 of cubicles 23, gangways 25 are provided which are formed of floor elements 26.

Thus is achieved a floor with rows 22 of cubicles 23 and gangways 25 of floor elements 26.

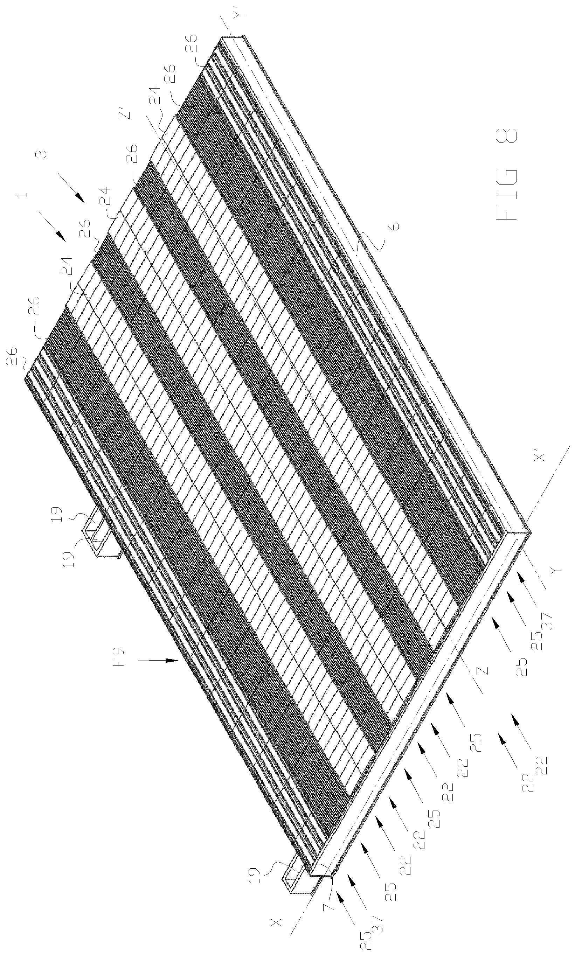

This is clearly illustrated for example in figures 8 to 10.

The bed floors 24 and floor elements 26 rest on the lateral retaining walls 11 forming the side walls of the manure pit compartments 10.

The gangways 25 are formed of concrete, grooved floor elements 26, for example in the shape of sheets 26 placed at some intermediate distance from each other over the manure pit 2, so that manure can fall or can be pushed between the floor elements 26 in the manure pit 2.

The outer passages serve as feed compartments 37 and they are made somewhat different to this end with another type of floor elements.

The rows 22 of cubicles 23 extend in a direction ZZ' which is at right angles to the longitudinal direction VV' in which the basement compartments 10 and their lateral retaining walls 11 extend between the opposite side walls 8 of the cowshed 1 on the one hand, and which is parallel to the direction YY' in which these opposite side walls 8 extend on the other hand.

In the given embodiment of a cowshed 1 according to the invention, two rows 22 of adjacent cubicles 23 are each time provided between two gangways 25 of the cowshed 1.

These pairs of rows 22 of cubicles 23 are each time arranged symmetrically in relation to the middle MM' of the rows 22 of cubicles 23 concerned.

Under each row 22 of cubicles 23, several of the aforesaid tubular ducts 20 are provided, more specifically three in this case, extending in the direction ZZ' at right angles to the direction VV' according to which the manure pit compartments 10 and the lateral retaining walls 8 extend.

The bed floors 24 consist of a concrete sheet 27 with a flat bottom 28 in or on which, on the top side, one or several divisions 29 can be provided so as to form individual berths for the livestock.

Each bed floor 24 rests on either side on transverse support beams 30 extending between two above-mentioned lateral retaining walls 11 of an underlying manure pit compartment 10.

Between the transverse support beams 30 are provided sheets 31 which also rest on the respective lateral retaining walls 11.

A space 32 is left between the sheets 31 and the bottom 28 of the overlying bed floors 24 so as to form one or several of the above-mentioned tubular ducts 20.

Thus, the tubular ducts 20 are formed under the cubicles 24 in the space 32 between the sheets 31, the bottom 28 of the bed floors 24 and the transverse support beams 30.

Other intermediate elements 33 serve as partitions 33 to define several tubular ducts 20.

These intermediate elements 33 or bars 33 extend parallel to the transverse support beams 30 and they can be made of all sorts of materials, preferably light materials.

Between the sheets 31 or between the sheets 31 and a support beam 30 is left a certain space S to form an opening 21 through which gases from the manure pit compartments 10 can move or can be conducted to a tubular duct 20 above the sheets 28, which is indicated by arrows in figures 5 to 7.

In the embodiment of a cowshed 1 according to the invention as shown in the figures, several tubular ducts 20 are formed under each bed floor 24, wherein per bed floor 24 only one of the tubular ducts 20 is provided with an opening 21 which allows gases to move or to be conducted from the manure pit compartments 10 to the tubular duct 20 concerned.

Further, in the given embodiment of a cowshed 1 according to the invention, each row 22 of cubicles 23 is formed of bed floors 24 under which several tubular ducts 20 are present, wherein the influx of gases from the manure pit compartments 10 is evenly distributed over the different tubular ducts 20 by opening each tubular duct 20, via an opening 21, to merely a fraction of the manure pit compartments 10 over which it passes.

Thus, in the bed floors 24 covering the fraction 34 of manure pit compartments 10 which are located most forward in the cowshed 1, only the outermost tubular ducts 20 are provided with an opening 21 for sucking in gases from the underlying manure pit compartments 10.

This is achieved by arranging the sheets 31 such that the openings 21 are situated most to the outside.

This situation is represented in figure 5.

In the bed floors 24 covering the fraction 35 of manure pit compartments 10 situated in the middle of the cowshed 1, only the middle tubular ducts 20 are provided with an opening 21 for sucking in gases from the underlying manure pit compartments 10, which is again achieved by arranging the sheets 31 correspondingly.

This situation is represented in figure 6.

Finally, in the bed floors 24 covering the fraction 36 of manure pit compartments 10 situated most in the back of the cowshed 1, only the innermost tubular ducts 20 are provided with an opening 21 for sucking in gases from the underlying manure pit compartments 10, which is once more achieved by arranging the sheets 31 correspondingly.

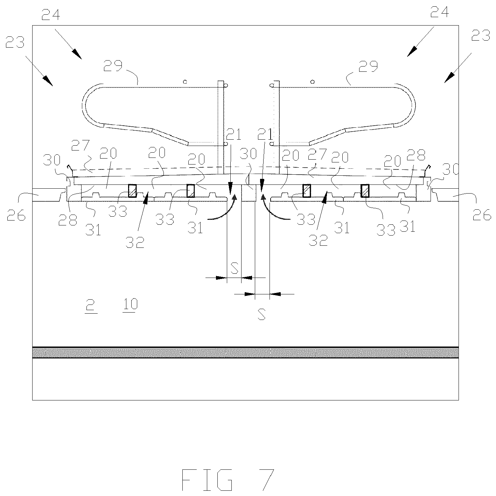

This situation is represented in figure 7.

Thus, one obtains a situation wherein for each fraction 34 to 36 of manure pit compartments 10, a tubular duct 20 is available under or in the bed floors 24 for extracting gases, whereby there is an equal distribution over the different tubular ducts 20.

It is clear that in this manner, extracting gases from a large cowshed 1 can be easily optimised.

Naturally, the tubular ducts 20 are intended to be connected to an extraction system, which is further not shown in the figures, so that harmful gases from the manure pit compartments 10 can be discharged through the respective tubular ducts 20 to an air scrubber.

The invention is by no means restricted to the embodiments of a cowshed 1 according to the invention described by way of example and represented in the accompanying drawings; on the contrary, such a cowshed 1 can be achieved in other ways while still remaining within the scope of the invention.

## Claims

1. Cowshed (1) with a shed floor (3) for stalling livestock, wherein the shed floor (3) comprises cubicles (23) and a platform of gangways (25), and wherein a manure pit (2) is provided under the shed floor (3), wherein the manure pit (2) consists of a pit (5) in which manure pit compartments (10) are formed parallel to one another, wherein each basement compartment (10) extends in its longitudinal direction (VV') and is laterally delimited by parallel, lateral retaining walls (11) extending in the same longitudinal direction (VV') of a manure pit compartment, **characterised in that** one or several tubular ducts (20) are integrated in the shed floor (3) extending mainly in a direction (UU') which is not parallel to the longitudinal direction (VV') of the manure pit compartments (10) and whereby one or several openings (21) are provided in said one or several tubular ducts (20) via which gases which are present in the manure pit compartments (10) can flow into at least one of the tubular ducts (20) so as to be discharged.

2. Cowshed (1) according to claim 1, **characterised in that** the tubular ducts (20) extend in a direction (UU') at right angles to the longitudinal direction (VV') of the manure pit compartments (10).

3. Cowshed (1) according to claim 1 or 2, **characterised in that** several tubular ducts (20) are integrated in the shed floor (3), whereby the influx of gases from the manure pit compartments (21) is evenly distributed over the different tubular ducts (20) by opening every tubular duct (20), via an opening (21), to only a fraction (34-36) of the manure pit compartments (10) over which it passes.

4. Cowshed (1) according to one or several of the preceding claims, **characterised in that** the cowshed (1) comprises rows (22) of cubicles (23) arranged next to one another, wherein the rows (22) of cubicles (23) extend in a direction (ZZ') at right angles to the longitudinal direction (VV') of the basement compartments (10) on the one hand, and which is parallel to the direction (UU') in which the tubular ducts (20) extend on the other hand.

5. Cowshed (1) according to claim 4, **characterised in that** under each row (22) of cubicles (23), one or several of the above-mentioned tubular ducts (20) are provided which extend at right angles to the longitudinal direction (VV') of the manure pit compartments (10) and wherein one or several openings (21) are provided via which gases which are present in the manure pit compartments (10) can flow into at least one of the tubular ducts (20).

6. Cowshed (1) according to one or several of the preceding claims, **characterised in that** the shed floor (3) comprises cubicles (23) and a platform of gangways (25), formed with bed floors (24) and floor elements (26) respectively, and wherein a bed floor (24) consists of a concrete sheet (27) with a predominantly flat bottom (28), wherein each bed floor (24) rests on transverse support beams (30) on either side extending between two above-mentioned lateral retaining walls (11) of an underlying manure pit compartment (10) and wherein, between the transverse support beams (30), sheets (31) are provided which also rest on the respective lateral retaining walls (11), wherein a space (32) is left between the sheets (31) and the bottom (28) of the overlying bed floors (24) so as to form one or several of the above-mentioned tubular ducts (20).

7. Cowshed (1) according to claim 6, **characterised in that** the tubular ducts (20) under the cubicles (24) are formed of the space (32) between the sheets (31), the bottom (28) of the bed floors (24) and the transverse support beams (30) and possibly other intermediate elements (31) serving as partitions (31) to define a tubular duct (20) and which extend parallel to the transverse support beams (30).

8. Cowshed (1) according to claim 7, **characterised in that** between sheets (31) or between sheets (31) and a support beam (30) is left a certain space (S) to form an opening (21) via which gases from the manure pit compartments (10) can move or be conducted to a tubular duct (20) above the sheets (31).

9. Cowshed (1) according to one or several of the preceding claims, **characterised in that** several tubular ducts (20) are formed under a bed floor (24), whereby per bed floor (24) only one or a few of the tubular ducts (20) is/are provided with an opening (21) allowing for gases to move or be conducted from the manure pit compartments (10) to the tubular duct (20) concerned.

10. Cowshed (1) according to one or several of the preceding claims 3 to 8, **characterised in that** each row (22) of cubicles (23) is formed of bed floors (24) under which several tubular ducts (20) are situated, whereby the influx of gases from the manure pit compartments (10) is evenly distributed over the different tubular ducts (20) by opening every tubular duct (20), via an opening (21), to only a fraction (34-36) of the manure pit compartments (10) over which it passes.

11. Cowshed (1) according to one or several of the preceding claims, **characterised in that** one or several of the tubular ducts (20) are connected to an extraction system which discharges harmful gases from the manure pit compartments (10) through the respective tubular ducts (20) to an air scrubber.

12. Cowshed (1) according to one or several of the preceding claims, **characterised in that** in the event that between two gangways (25) of the cowshed (1) two rows (22) of cubicles (23) are provided adjacent to one another, these pairs of rows (22) of cubicles (23) are each time arranged symmetrically in relation to the middle (MM') of the respective rows (22) of cubicles (23).

13. Cowshed (1) according to one or several of the preceding claims, **characterised in that** the cowshed (1) has a predominantly rectangular perimeter, formed of a pair of opposite side walls (8) forming the length (L) of the cowshed (1) and which extend in the direction (YY'), and a pair of opposite end walls (9) forming the width (B) of the cowshed (1) and which extend in the direction (XX'), wherein parallel rows (22) of cubicles (23) are provided in the cowshed (1) and wherein the manure pit compartments (10) and the associated retaining walls (11) extend in a direction (VV') parallel to the direction (XX') of the end walls and perpendicular to the direction (22') in which the parallel rows (22) of cubicles (23) extend, and thus also perpendicular to the direction (UU') in which the tubular ducts (20) extend.

14. Cowshed (1) according to one or several of the preceding claims, **characterised in that** a number of adjacent manure pit compartments (10) are connected to one another via an opening (16) in the retaining walls (11) and wherein, for each group of manure pit compartments (17) which are thus connected, a manure mixer (18) is provided for mixing the manure in the relevant group of manure pit compartments (17).

15. Cowshed according to claims 13 and 14, **characterised in that** each group of manure pit compartments (17) is extended somewhat laterally at the manure mixers (18), wherein the pit (5) of the manure pit (2) and the associated manure pit compartment (10) extends outside the walls (8) of the cowshed (1) so as to form a mixer pit (19) from where manure can be pumped from the outside of the cowshed (1).
